# EUROPÄISCHE PATENTANMELDUNG

(11) **EP 1 814 207 A1**
(43) Veröffentlichungstag der Anmeldung: **01.08.2007**
(21) Anmeldenummer: 06001998.1
(22) Anmeldetag: 31.01.2006
(51) Int. Cl.: H02K 3/50

(54) **Schwingungsdämpfungssystem für einen Stator einer elektrischen Maschine**

(71) Anmelder: SIEMENS AKTIENGESELLSCHAFT, 80333 München (DE)
(72) Erfinder: Beck, Ronald, Dr., 45475 Mülheim an der Ruhr (DE); Ehehalt, Ulrich, 45131 Essen (DE); Kowalski, Waldemar, 45472 Mülheim an der Ruhr (DE); Lehmann, Christoph, Dr., 47506 Neukirchen-Vluyn (DE); Richter, Christoph, Dr., 49477 Ibbenbüren (DE); Spiess, Karlheinz, 47445 Moers (DE)

(57) **Zusammenfassung**

Schwingungsdämpfungssystem für einen Stator (1) einer elektrischen Maschine mit einem rotierenden Bauteil, wobei eine Wicklung (2) an einem Stützbauteil (3) des Stators (1) gehalten ist. Zumindest eines der Konstruktionsmerkmale Form und Befestigung des Stützbauteils (3) weist eine bei periodischer Anregung des Stators (1) durch das rotierende Bauteil der elektrischen Maschine schwingungstilgend wirkende Unsymmetrie auf.

## Beschreibung

Die Erfindung betrifft ein Schwingungsdämpfungssystem für einen Stator einer elektrischen Maschine, insbesondere eines Generators. Ein solches System ist beispielsweise aus der EP 0 950 279 B1 bekannt.

Das System nach der EP 0 950 279 B1 verfolgt den Ansatz, die Eigenfrequenz der Wicklungen eines Stators durch geeignete mechanische Belastung der an einer Wicklungsabstützungsstrebe gehaltenen Statorwicklungen auf ein ausreichend hohes Maß einzustellen. Zu diesem Zweck umfasst das Schwingungsdämpfungssystem einen zwischen der Wicklungsabstützungsstrebe und den Wicklungen angeordneten Schubblock sowie mehrere die Wicklungen belastende Federn. Auf eine Phasenbeziehung zwischen Eigenschwingungen des Stators und sonstigen in der elektrischen Maschine auftretenden Schwingungen wird in der EP 0 950 279 B1 nicht eingegangen.

Der Erfindung liegt die Aufgabe zugrunde, ein Schwingungsdämpfungssystem für einen Stator einer elektrischen Maschine, insbesondere für einen Wickelkopf eines Generators, anzugeben, welches besonders wirksam ist.

Diese Aufgabe wird erfindungsgemäß gelöst durch ein Schwingungsdämpfungssystem mit den Merkmalen des Anspruchs 1. Dieses für eine elektrische Maschine mit einem Stator und einem rotierenden Bauteil, insbesondere für einen Generator oder einen Motor, geeignete System umfasst eine Wicklung, welche an einem Stützbauteil des Stators gehalten ist. Zumindest eines der Konstruktionsmerkmale Form und Befestigung des Stützbauteils weist eine Unsymmetrie auf, welche bei periodischer Anregung des Stators durch das rotierende Bauteil der elektrischen Maschine schwingungstilgend wirkt. Bei dem Stützbauteil handelt es sich insbesondere um eine Stützstruktur eines Wickelkopfs der elektrischen Maschine.

Es wird von der Überlegung ausgegangen, dass die magnetischen Kräfte im Stator die Form einer umlaufenden Welle beschreiben. Diese Welle weist mehrere Knoten auf, deren Anzahl von der Wicklungsart abhängt, und läuft mit der Rotordrehzahl um. Bei einem eine zyklisch periodische Form aufweisenden Wicklungskopf des Stators könnte sich eine mechanische Schwingung ausbilden, die eine der umlaufenden Welle entsprechende Anzahl an Knoten hat. Abhängig von den durch die Bauart des Stators gegebenen Resonanzeigenschaften würde sich der Stator durch die periodische Anregung aufschwingen, was im Extremfall zur Zerstörung von Bauteilen führen kann. Allgemein kann jedes Erregungsmuster Energie in eine Eigenschwingung einbringen, dessen Kraftmuster nicht-orthogonal zur Eigenschwingungsform ist.

Um eine solche Anregung der Eigenschwingungen zu vermeiden, ist beim gemäß der Erfindung ausgebildeten Stator die zyklische Periodizität eines tragenden Bauteils, insbesondere eines Stützbauteils des Wicklungskopfes, gezielt gestört. Dies ist beispielsweise durch eine keinem Symmetriemuster folgende Verteilung von Massen, vorzugsweise durch Verstärkungen und/oder Aussparungen im Stützbauteil, realisiert. In jedem Fall ist dadurch eine zumindest annähernde Orthogonalität zwischen Eigenschwingung und anregender Kraft erreichbar. Auf diese Weise ist das Skalarprodukt zwischen der Eigenform der Schwingung und dem Anregungsmuster minimiert. Eine Energieübertragung von der auf die magnetischen Kräfte zurückzuführenden umlaufenden Welle auf den als schwingungsfähiges System betrachteten Stator ist somit höchstens in sehr geringem Maß möglich. Letztlich führen anregende periodische Belastungen, die auf den Stromfluss im Stator zurückzuführen sind, zu keinen relevanten Zusatzbeanspruchungen von Bauteilen des Stators.

Sofern die schwingungstilgenden Eigenschaften durch die Art der Befestigung des Stators an einer Umgebungskonstruktion realisiert sind, ist der Stator vorzugsweise elastisch an die Umgebungskonstruktion, insbesondere an ein Gehäuse des Stators, angebunden. In besonders bevorzugter Weise ist das Stützbauteil des Stators gegenüber der Umgebungskonstruktion mittels einer Stützkonstruktion vorgespannt.

Nach einer weiteren, mit den vorstehend genannten Merkmalen kombinierbaren Ausgestaltung ist am Stützbauteil mindestens ein Zusatzgewicht zur Erzeugung einer definierten Unsymmetrie des Stators befestigt. Der schwingungstilgende Effekt von Zusatzgewichten ist auch durch unsymmetrisch verteilte Aussparungen im Stützbauteil erzielbar, welche ergänzend zu Zusatzgewichten oder als alleinige unsymmetrische Strukturen vorgesehen sein können.

Unabhängig davon, ob die Unsymmetrie des Stützbauteils durch die Art dessen Anbindung an eine zumindest näherungsweise starre Umgebungskonstruktion und/oder durch die Massenverteilung innerhalb des Stützbauteils gegeben ist, weisen hierdurch Eigenschwingungen des Stators in Relation zu anregenden Schwingungen des rotierenden Bauteils der elektrischen Maschine eine Modeformverstimmung auf. Als anregende Schwingungen des rotierenden Bauteils werden zwischen Rotor und Stator wirkende, sich zyklisch ändernde elektromagnetische Kräfte bezeichnet, deren Frequenz der Rotordrehzahl entspricht.

Ein gesondertes Dämpfungselement ist nicht notwendigerweise Bestandteil des Schwingungsdämpfungssystems. Um besonders ausgeprägte schwingungstilgende Eigenschaften zu erzielen, ist es jedoch in vorteilhafter Ausgestaltung möglich, das Schwingungsdämpfungssystem mit einem zusätzlichen Dämpfungssystem, insbesondere mit einem aktiven Dämpfungssystem, dessen Eigenschaften steuerbar sind, zu kombinieren.

In jedem Fall ist durch die systemimmanente Unterdrückung von Vibrationen im Stator, insbesondere im Statorwickelkopf, dessen mechanische Beanspruchung verringert und damit dessen Lebensdauer verlängert. Insbesondere wird die Bildung von Reibstaub vermieden sowie die Lösung des Wickelkopfverbandes des Stators verhindert.

Der Vorteil der Erfindung liegt insbesondere darin, dass in einer elektrischen Maschine mit einem rotierenden Bauteil schwingungstilgende Eigenschaften eines Stators durch die unsymmetrische Geometrie und/oder Befestigung eines Statorwicklungen tragenden Stützbauteils erzielt werden, wodurch ein passiv wirksames und damit äußerst robustes System zur Unterdrückung von Schwingungen gegeben ist.

Nachfolgend werden mehrere Ausführungsbeispiele der Erfindung anhand einer Zeichnung näher erläutert. Hierin zeigen jeweils in symbolisierter Darstellung:
- FIG 1: in einer Prinzipdarstellung einen Stator einer elektrischen Maschine mit einem schwingungstilgenden Stützbauteil, und
- FIG 2 bis 4: jeweils eine Ausführungsform eines schwingungstilgenden Wickelkopfes eines Stators.

Einander entsprechende oder gleichwirkende Teile sind in allen Figuren mit den gleichen Bezugszeichen gekennzeichnet.

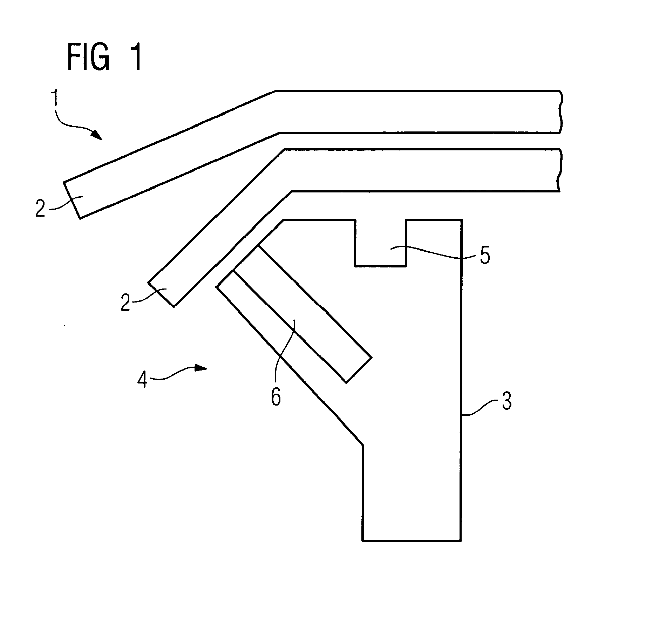

In FIG 1 ist grob schematisiert ein Ausschnitt aus einem Stator 1 eines Generators, nämlich ein Teil des Wickelkopfes 4 des Stators 1, dargestellt. Hinsichtlich des prinzipiellen Aufbaus sowie der Funktion des Stators 1 wird auf die EP 0 950 279 B1 verwiesen. Eine Wicklung 2 ist auf einem Stützbauteil 3 gehalten. Abweichend von der symbolisierten Darstellung sind die Teile 2,3 des Wickelkopfes 4 des Stators 1 kraftübertragend miteinander gekoppelt.

Zwischen der Wicklung 2 und einem nicht dargestellten Rotor des Generators wirken bei dessen Betrieb elektromagnetische Kräfte, welche eine Welle darstellen, die entsprechend der Drehzahl des Rotors umläuft und eine Anzahl an Knoten aufweist, die von der Bauart des Generators abhängt. Im Fall einer - hier nicht gegebenen - zyklisch periodischen Form des Wickelkopfes 4 könnte sich bei Erfüllung gegebener Resonanzbedingungen eine mechanische Schwingung im Wickelkopf 4 ausbilden, welche ebenfalls Knoten - in einer der anregenden Schwingung entsprechenden Zahl - aufweist.

Das Auftreten einer derartigen Resonanz wird durch eine gezielte Störung der zyklischen Periodizität des Wickelkopfes 4 verhindert, wobei schwingungstilgende Eigenschaften des Stators 1 durch die unsymmetrische, insbesondere keine Rotationssymmetrie aufweisende, Form des Stützbauteils 3 des Stators 1 gegeben sind. Sowohl eine Aussparung 5 als auch eine verstärkende Leiste 6 bilden Statorschwingungen entgegenwirkende Elemente.

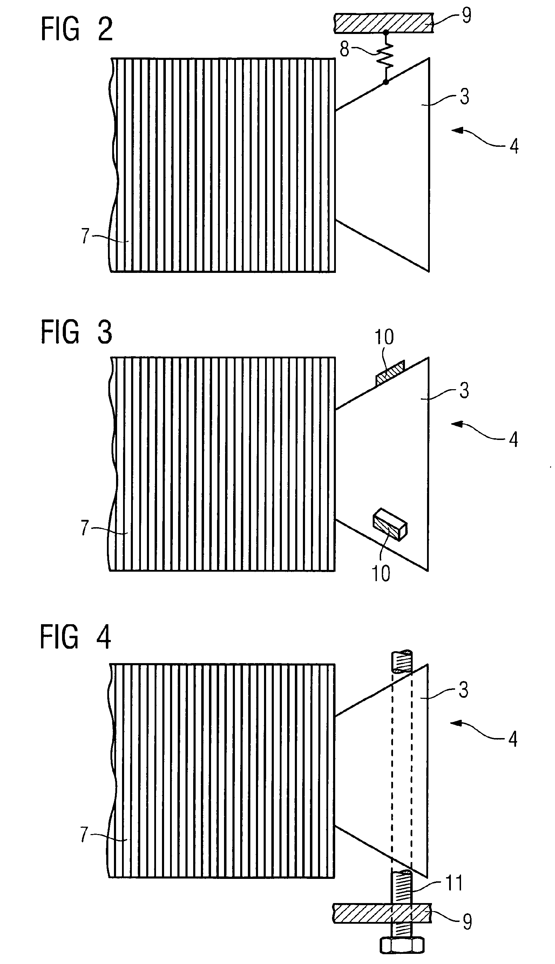

Verschiedene konkrete Bauformen schwingungstilgend gestalteter elektrischer Maschinen, nämlich Generatoren, werden im folgenden anhand der Figuren 2 bis 4 erläutert, wobei die Wicklung 2 des Wickelkopfes 4 der Übersichtlichkeit halber nicht dargestellt ist.

Im Ausführungsbeispiel nach Figur 2 ist der an ein Blechpaket 7 anschließende Wickelkopf 4 des Stators 1 mittels eines Federelementes 8 elastisch an ein ortsfestes Bauteil 9, nämlich ein Gehäuse des Stators 1, angebunden. Sofern in nicht aus der Darstellung ersichtlicher Weise mehrere Federelemente 8, welche bevorzugt auch dämpfende Eigenschaften haben, zur Verbindung des Wickelkopfes 4 mit dem Gehäuse 9 vorgesehen sind, sind die Punkte, an denen die Federelemente 8 Kräfte in das Stützbauteil 3 des Wickelkopfes 4 einleiten, unsymmetrisch am Wickelkopf 4 verteilt. Vorzugsweise sind die mechanischen Eigenschaften des mindestens einen Federelementes 8 fernbetätigt verstellbar. Auf diese Weise sind die Eigenschwingungen des Wickelkopfes 4 während des Betriebs des Generators maximal schwingungsdämpfend einstellbar.

Das Ausführungsbeispiel nach Figur 3 zeigt einen Wickelkopf 4 mit an diesem befestigten Zusatzgewichten 10, welche in unsymmetrischer Verteilung am Umfang des Wickelkopfes 4 angeordnet sind. Die Zusatzgewichte 10 sind bei Stillstand des Generators je nach Bedarf austauschbar oder an anderer Stelle des Stützbauteils 3 befestigbar, um die Schwingungseigenschaften des Wickelkopfes 4 in gewünschter Weise einzustellen. In jedem Fall wird eine Statorschwingungen unterdrückende Wirkung durch gezielt eingebrachte Unsymmetrien erreicht. In nicht dargestellter Weise kann der Wickelkopf 4 zusätzlich Aussparungen 5 (s. FIG 1) aufweisen, deren Geometrie vorzugsweise gleichzeitig genutzt wird, um Leitungen, die den im Generator erzeugten Strom abnehmen, zu führen.

Im Ausführungsbeispiel nach Figur 4 ist der Wickelkopf 4 des Generators mittels einer im Wesentlichen bolzenförmigen Stützkonstruktion 11 mit dem Gehäuse 9 verspant. Im Vergleich mit dem Ausführungsbeispiel nach Figur 2 (s. Federelement 8) ist die Stützkonstruktion 11 deutlich steifer ausgelegt und erfüllt auch eine statische Funktion. Zugleich weist die Stützkonstruktion 11 elastische Eigenschaften auf, wodurch die Schwingungseigenschaften des Stators 1 in relevanter Weise geändert werden, das heißt, ebenso wie in den anderen Ausführungsbeispielen, eine Modeformverstimmung der Statorschwingungen erzielt wird.

## Patentansprüche

1. Schwingungsdämpfungssystem für einen Stator (1) einer elektrischen Maschine mit einem rotierenden Bauteil, wobei eine Wicklung (2) an einem Stützbauteil (3) des Stators (1) gehalten ist,
**dadurch gekennzeichnet, dass**
zumindest eines der Konstruktionsmerkmale Form und Befestigung des Stützbauteils (3) eine bei periodischer Anregung des Stators (1) durch das rotierende Bauteil der elektrischen Maschine schwingungstilgend wirkende Unsymmetrie aufweist.

2. Schwingungsdämpfungssystem nach Anspruch 1,
**dadurch gekennzeichnet, dass**
ein Wickelkopf (4) des Stators (1) unsymmetrisch und **dadurch** schwingungstilgend aufgebaut ist.

3. Schwingungsdämpfungssystem nach Anspruch 2,
**dadurch gekennzeichnet, dass**
eine elastische Anbindung des Wickelkopfes (4) an ein ortsfestes Bauteil (9) vorgesehen ist.

4. Schwingungsdämpfungssystem nach Anspruch 2 oder 3,
**dadurch gekennzeichnet, dass**
eine Stützkonstruktion (11) zur Verspannung des Wickelkopfes (4) gegenüber einem ortsfesten Bauteil (9) der elektrischen Maschine vorgesehen ist.

5. Schwingungsdämpfungssystem nach Anspruch 3 oder 4, **dadurch gekennzeichnet, dass** das ortsfeste Bauteil (9) ein Gehäuse des Stators (1) ist.

6. Schwingungsdämpfungssystem nach einem der Ansprüche 1 bis 5,
**dadurch gekennzeichnet, dass**
am Stützbauteil (3) mindestens ein Zusatzgewicht (10) zur Erzeugung einer Unsymmetrie des Stators (1) befestigt ist.

7. Schwingungsdämpfungssystem nach einem der Ansprüche 1 bis 6,
**dadurch gekennzeichnet, dass**
die Unsymmetrie des Stützbauteils (3) derart eingestellt ist, dass ein Eigenschwingung des Stators (1) in Relation zu einer anregenden Schwingungen des rotierenden Bauteils der elektrischen Maschine eine Modeformverstimmung aufweist.

8. Schwingungsdämpfungssystem nach Anspruch 7,
**dadurch gekennzeichnet, dass**
eine Eigenschwingung des Stators (1) zumindest annähernd orthogonal zu einer anregenden Schwingung des rotierenden Bauteils der elektrischen Maschine ist.
